Europäisches Patentamt

European Patent Office

Office européen des brevets

(19)

(11) Publication number: **0 191 475**
A2

## EUROPEAN PATENT APPLICATION

(12)

(21) Application number: **86101773.9**

(51) Int. Cl.⁴: **B 29 D 9/00**

(22) Date of filing: **12.02.86**

(30) Priority: **12.02.85 JP 24605/85**

(43) Date of publication of application: **20.08.86**
**Bulletin 86/34**

(84) Designated Contracting States: **DE FR GB IT**

(71) Applicant: **MITSUBISHI RAYON CO. LTD., 3-19,**
**Kyobashi 2-chome Chuo-Ku, Tokyo 104 (JP)**

(72) Inventor: **Gotoh, Hajime Mitsubishi Rayon Co. Ltd.,**
**No. 1-60, Sunadabashi 4-ch. Higashi-ku, Nagoya-shi**
**Aichi (JP)**
Inventor: **Yokochi, Tadashi Mitsubishi Rayon Co. Ltd.,**
**No. 1-60, Sunadabashi 4-ch. Higashi-ku, Nagoya-shi**
**Aichi (JP)**
Inventor: **Hirano, Masami Mitsubishi Rayon Co. Ltd.,**
**No. 1-60, Sunadabashi 4-ch. Higashi-ku, Nagoya-shi**
**Aichi (JP)**

(74) Representative: **Eitle, Werner, Dipl.-Ing. et al, Hoffmann,**
**Eitle & Partner Patentanwälte Arabellastrasse 4,**
**D-8000 München 81 (DE)**

(54) Method of manufacturing sheet material.

(57) A method for manufacturing a fiber-reinforced sheet material having a curved orientation. A sheet precursor body is prepared in which reinforcing fibers aligned in one direction of orientation are laminated and impregnated with matrix resin and which has at least a portion bent along the direction of orientation of the fibers. The sheet precursor body is then sliced along a plane which includes all the laminated surfaces and which is parallel to the direction of orientation of the reinforcing fibers.

EP 0 191 475 A2

- 1 -

## METHOD OF MANUFACTURING SHEET MATERIAL

### BACKGROUND OF THE INVENTION

The present invention relates to a method of manufacturing a sheet material having a special fiber orientation used in manufacturing fiber-reinforced plastics (hereinafter abbreviated to "FRP").

In FRP, in order to make the FRP operate most effectively, it is desirable that reinforcing fibers (hereinafter simply referred to fibers) constituting the FRP be oriented along lines of force of stress applied to or generated in the FRP.

It is a rare case where stress is generated in FRP along only one direction, and therefore it is necessary to orient the fibers in a plurality of directions.

For the reasons described above, in manufacturing FRP, particularly in manufacturing FRP for which high performance is required, a method is employed in which dynamic requirements are satisfied by providing a large number of thin sheet materials each consisting of fibers oriented linearly in one direction (hereinafter such a uni-directional sheet is abbreviated to "UDS") and laminated so that the fibers are oriented in the necessary directions.

In actual cases, however, sometimes lines of force of stress are generated in FRP which are curved rather than extending linearly. For example, in a disk-like material rotating at a high speed, it can be considered there exists radial stress, lines of force of which extend radially from the center of rotation, and circumferential stress, the lines of force of which extend circumferentially coaxially. Further, in an L-shaped arm, there exist bent stress, the lines of force which are curved at a bent portion of the arm. It can be considered that there exist curved lines of force for both circumferential stress and bending stress.

Accordingly, it is desirable in FRP that thin sheet materials be employed in each of which fibers both curved-oriented (hereinafter a curved-oriented sheet is abbreviated to "COS") and uni-directionally oriented are suitably laminated, one on the other, as required.

In laminating such sheets, it is desirable to laminate a number of sheets formed as thinly as possible to thereby reduce distortion due to stress generated in the laminated sheets so as to obtain a homogeneous structure as a whole. Therefore, a thin sheet material in which fibers having a curved orientation (that is, COS) has been required. Conventionally, however, there has been available no method for manufacturing economically such a COS, and therefore it has been necessary that the FRP structure be formed by laminating only UDSs.

For example, in the case of a disc rotating at a high speed, it is most desirable that sheet materials having an orientation radially extending from the center of rotation and other sheet materials having a concentrical orientation be laminated one on the other. Conventionally, however, a FRP structure is obtained by laminating UDSs while shifting the UDSs, that is, while suitably angularly shifting the UDSs relative to each other (pseudo isotropic lamination). In this method, however, not all the fibers are oriented so as to effectively operate against generated stresses.

Further, in a laminated structure of an L-shaped arm, it is necessary to patch UDSs at the elbow portion of the L-shaped arm, and hence there occurs a drop in strength in the elbow portion.

In order to solve the above-mentioned problems in the prior art, the inventors have studied a method of manufacturing new sheet materials, specifically, COS material, and have proposed a method of modifying filament windings (as disclosed in Japanese Unexamined Patent

- 4 -

Publications Nos. 58-193117 and 58-211417). There is, however, a limit to the amount of curved orientation obtainable with this method and often a desired curved orientation cannot be obtained. For example, it is impossible to obtain a curved orientation having two or more inflection points (such as a sinusoidal curve), and it is also impossible to provide a closed-loop orientation such as concentric circles.

SUMMARY OF THE INVENTION

An object of the present invention is to provide a method of manufacturing a sheet material having substantially any desired curved orientation.

According to one aspect of the present invention, a method is provided of manufacturing sheet materials, each having a curved orientation, comprising the steps of: preparing a sheet precursor body in which uni-directionally aligned reinforcing fibers are laminated and impregnated with matrix resin and which has at least a portion bent along the direction of orientation of the fibers; and slicing the sheet precursor body along a plane which includes all the laminated surfaces and which is parallel to the orientation of the reinforcing fibers.

The above and other objects and features of the invention will become more fully apparent hereinafter from

- 5 -

a consideration of the following description taken in connection with the accompanying drawings.

## BRIEF DESCRIPTION OF THE DRAWINGS

Fig. 1 is a perspective view showing an example of a method of manufacturing a sheet precursor body used in the present invention;

Fig. 2-1 is a perspective view showing the appearance of the precursor body;

Fig. 2-2 indicates three-dimensional coordinates showing directions in the precursor body;

Fig. 3-a is a perspective view showing an example of another method of manufacturing the precursor body;

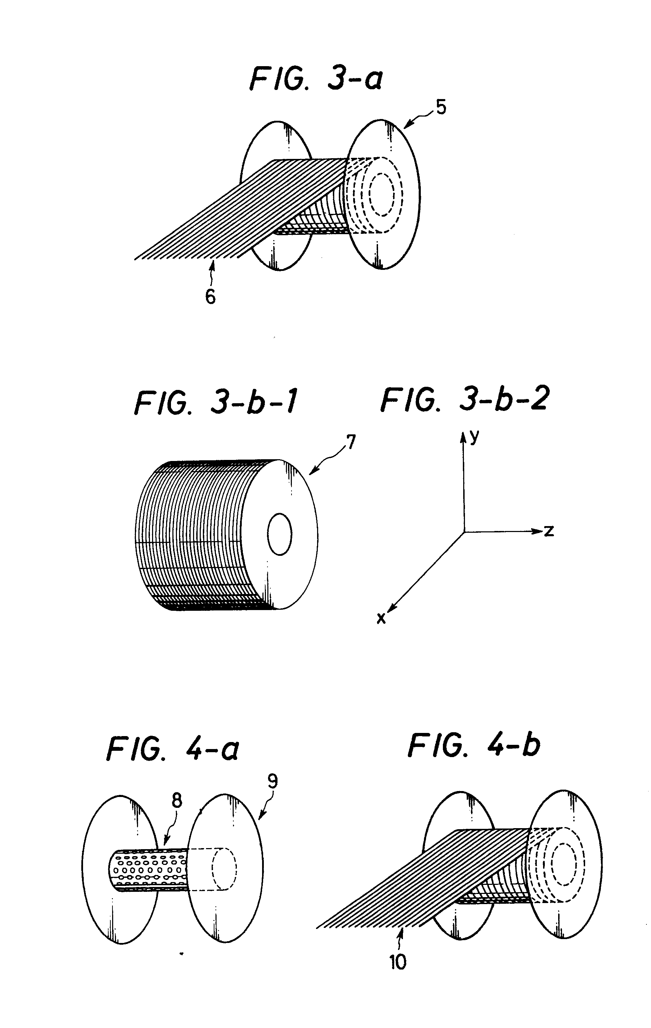

Fig. 3-b-1 is a perspective view showing a precursor body which is a rotary body;

Fig. 3-b-2 indicates three-dimensional coordinates of the same;

Fig. 4-a is a perspective view showing the appearance of a flanged bobbin used to obtain a precursor body which is a rotary body;

Fig. 4-b is a perspective view showing an example of a method of manufacturing the precursor body;

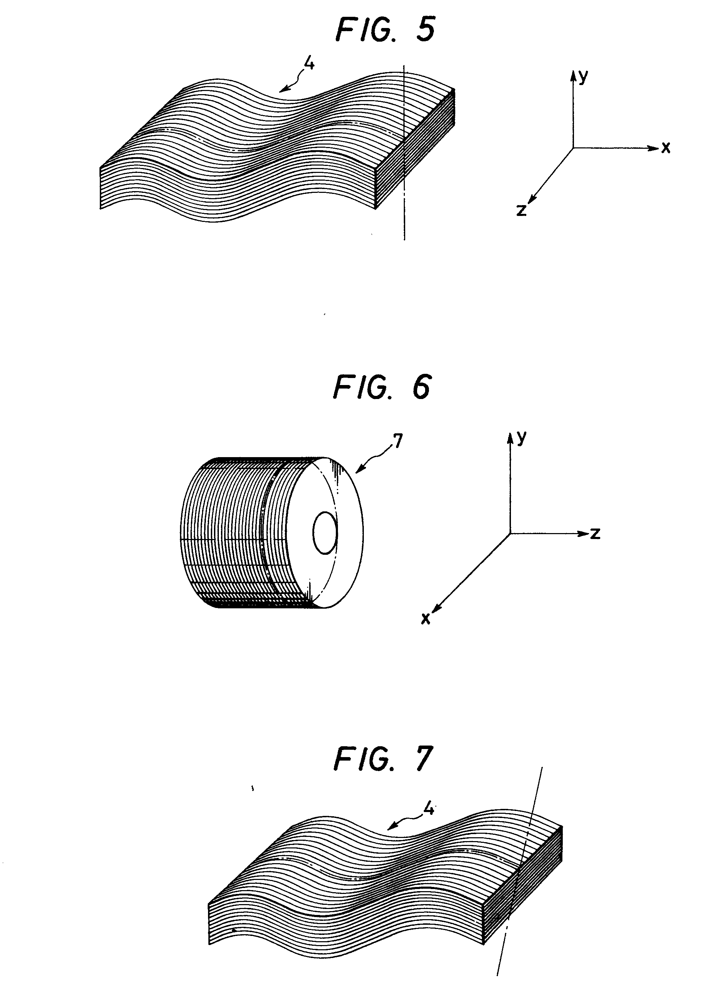

Figs. 5 to 7 are perspective views each showing sliced planes of the precursor body;

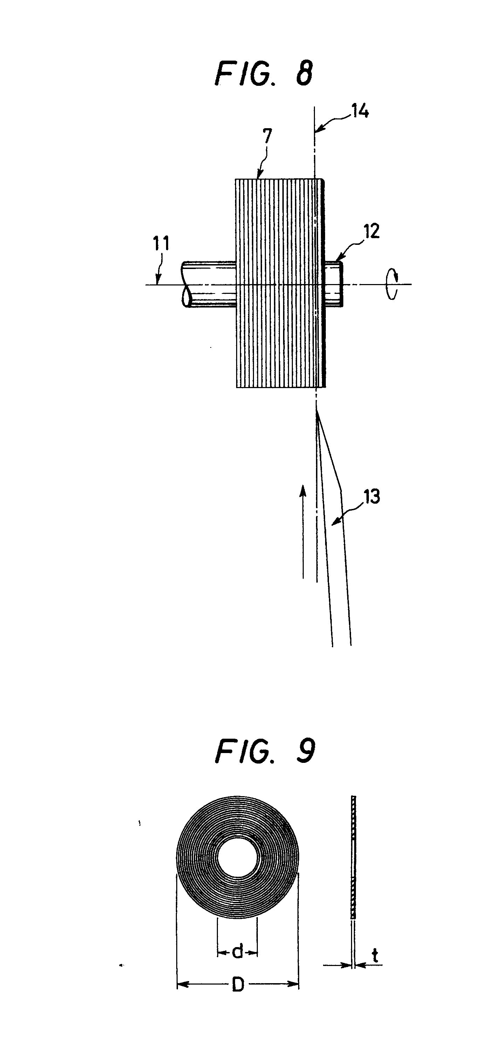

Fig. 8 is a schematic side view showing a method of slicing a precursor body which is a rotating body;

Fig. 9 shows a sliced sheet material having circumferential orientation in a top view (lefthand) and in a side view (righthand);

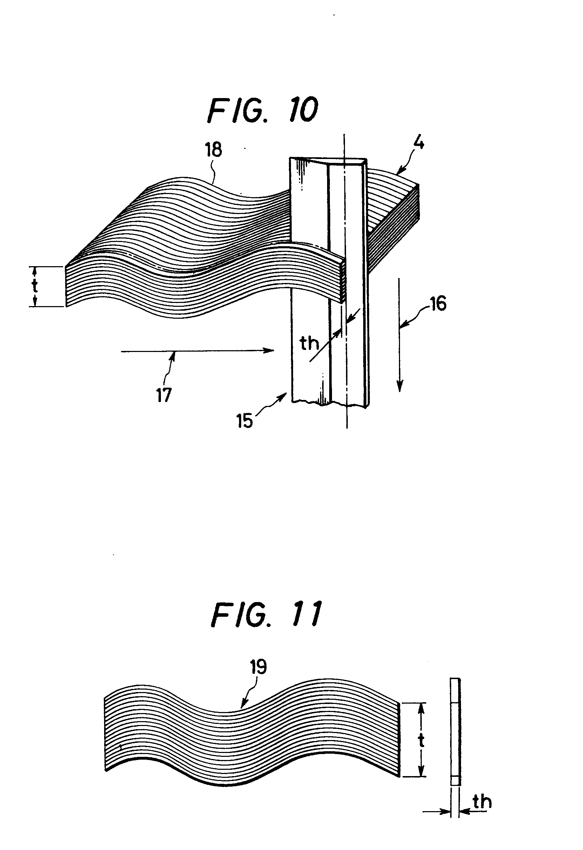

Fig. 10 is a schematic view illustrating a method of slicing a plane precursor body;

Fig. 11 shows the sliced sheet material of Fig. 10 having a corrugated orientation in a top view (lefthand) and a side view (righthand);

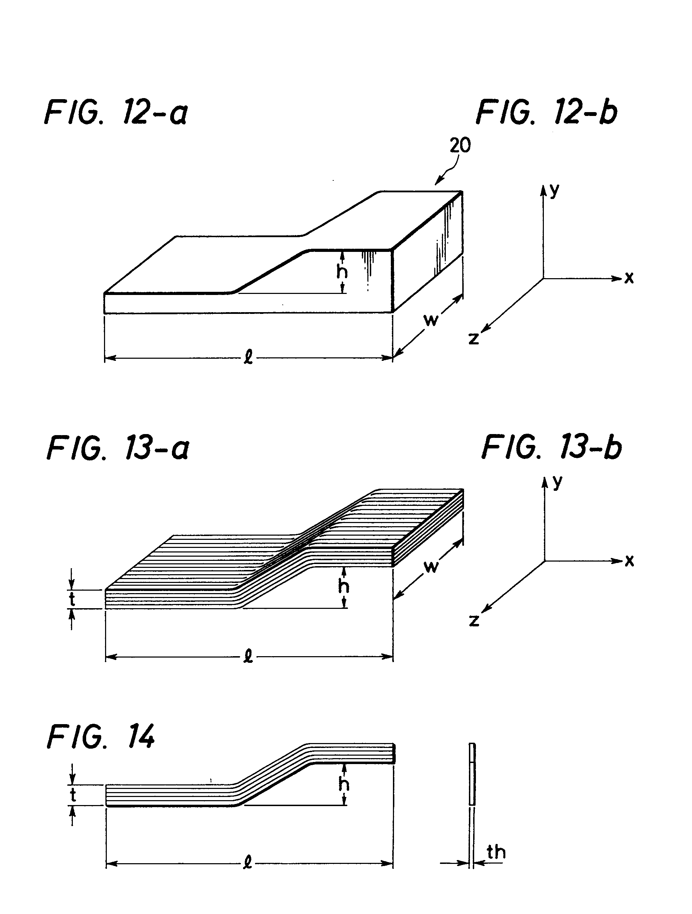

Fig. 12 is a perspective view showing the appearance of a metal base used in lamination;

Fig. 13-a is a perspective view showing the appearance of a precursor body manufactured using the metal base of Fig. 12;

Fig. 13-b indicates three-dimensional coordinates for the view of Fig. 13-a; and

Fig. 14 shows a sheet material having a bent orientation obtained by slicing the precursor body of Fig. 13-a in a top view (lefthand) and a side view (righthand).

DESCRIPTION OF THE PREFERRED EMBODIMENTS

Referring to the drawings, preferred embodiments of the present invention will now be described in detail.

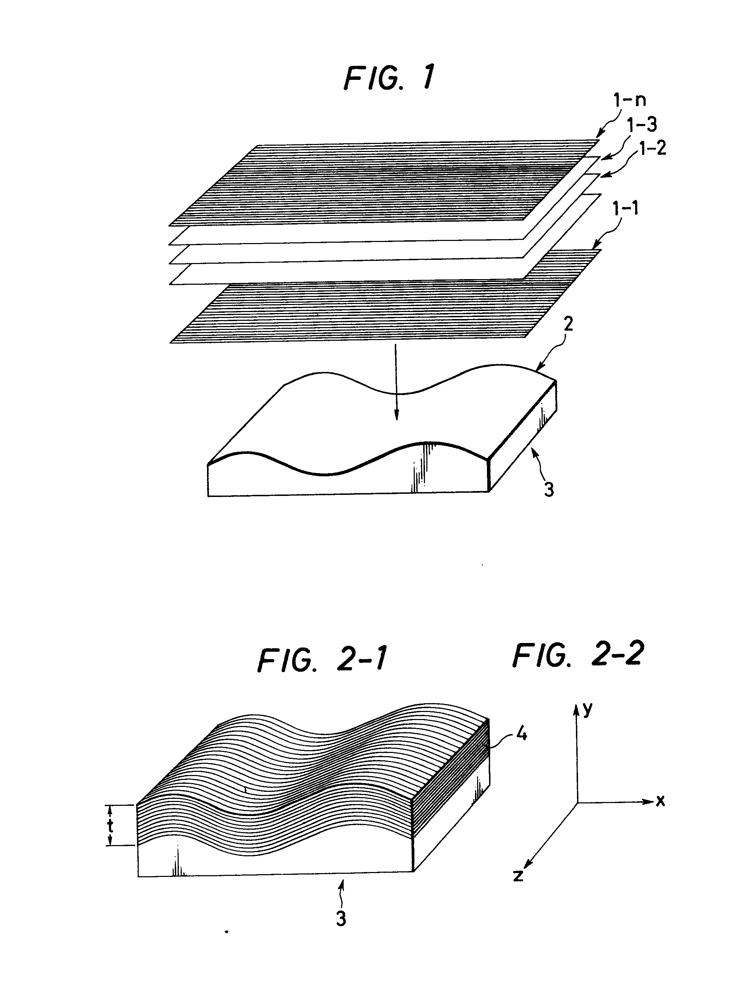

As used herein, the expression "at least a part of a sheet precursor body is bent along the orientation of reinforcing fiber" means that the sheet precursor body has at least one bent portion as shown in Figs. 2-1, 3-b-1, 13-a, etc.

The present invention will be described in brief first as to a sheet-like material in which fibers have a corrugated orientation and another sheet-like material in which the fibers have a concentrical orientation.

Figs. 1 and 2 show a precursor body for obtaining a COS and illustrate a method of manufacturing the same.

In Fig. 1, reference numerals 1-1 to 1-n represent thin sheet materials (UDS), in each of which fibers are linearly uni-directionally aligned and fixed with matrix resin. The $n$ UDSs are laminated one on one in the direction of an arrow on a base 3 having a wavy surface 2 so as to obtain a laminated body 4, as shown in Fig. 2-1. The thickness $t$ of the laminated body 4 is determined depending on the thickness of each of the UDSs and the number of the laminated UDSs. In the laminated body 4, as to the coordinates of Fig. 2-2, the orientation of fibers projected an x-z plane extends linearly parallel with the x-axis, that projected on an y-z plane extends linearly parallel with the y-axis, and that projected on the x-y plane extends wavily in conformance with the wave surface (represented by 2 in Fig. 1). Here, the x-direction agrees with the orientation of the fiber in each UDS and the y-direction agrees with the direction of lamination of the UDSs.

A method of manufacturing a laminated body and the properties of the same will be described further with reference to another example.

Fig. 3-a shows a state in which a UDS 6 is wound onto a flanged bobbin 5 so as to obtain a laminated body 7 as shown in Fig. 3-b-1. Similar to the case of Fig. 2, the orientation of the fibers projected on each of the y-z and x-z planes extends linearly, and that projected on the x-y plane extends concentrically. Here, similar to Fig. 2-2, the x-direction agrees with the orientation of the fibers in each UDS and the y-direction agrees with the direction of lamination of the UDSs.

In such a laminated body as shown in each of the two examples described above, the orientation of fibers constituting the laminated body extends linearly within each of two of the three projecting planes. According to the present invention, such a laminated body is called a sheet precursor body (hereinafter simply referred to as "a precursor body"). Methods of manufacturing such a precursor body as defined above will be described further.

Although a method of obtaining a precursor body by using UDSs has been explained above with reference with Figs. 1 and 3-a, it is possible to employ another method in which a precursor body is obtained in such a manner that only the fibers are laminated and then the laminated fibers are impregnated with matrix resin.

For example, fibers or strands 10 containing no matrix resin are wound, as shown in Fig. 4-b, onto a flanged bobbin 9 having a perforated core 8, as shown in Fig. 4-a. The wound fiber 10 may be obtained by winding fiber in the form of sheet spread over the whole width of the flanged bobbin 9, or, alternatively, by winding one or several strands while slightly traversing in the axial direction of the flanged bobbin 9 so as to fill the whole width of the flanged bobbin 9. The thus laminated fiber layers wound on the perforated core 8 are impregnated with matrix resin pressed out of the inside of the perforated core 8 to thereby obtain a precursor body 7 as shown in Fig. 3-b-1 in which the fiber is fixed with the matrix resin.

Alternatively, a strand or a group of strands may be wound onto the flanged bobbin while being impregnated with matrix resin.

- 10 -

In the case where the strands are traversed in laminating, it is desirable to make the traversing angle to be as small as possible so as to make the strands substantially parallel to the x-axis, the angle being preferably limited within a range of +5° to -5°.

The two components constituting the precursor body used in the present invention, that is, the fibers and the matrix resin, will be described hereunder.

As the fiber or the strands, it is possible to use any organic fibers of an organic material such as poly(vinyl alcohol), nylon, polyester, aramid, or the like, and inorganic fibers of an inorganic material such as glass, carbon, alumina, or the like can be used. Although the kind of the fiber is not particularly limited, for example, boron fibers having a large diameter and high hardness are not preferable.

As the matrix resin, either a thermoplastic resin or thermosetting resin can be used. In the case of thermosetting resin, the resin in an unhardened state, that is, the resin in a B-stage state, may be used according to the present invention.

The laminated body (that is, the precursor body) described above is desirably pressed during or after lamination to make the laminated body compact and homogeneous.

In the case of the plane laminated body 4 shown in Fig. 2-1, generally, the laminated body 4 is pressed in the y-direction, that is, in the direction of lamination (under the condition that the laminated body is restricted in the z-direction), and it is desirable to perform this operation so that the laminated body is pressed to make the laminated body compact and homogeneous in the following manner. The UDSs used for making such a plane laminated body 4 as shown in Fig. 2-1 are generally extremely homogeneous in the longitudinal direction (the orientation direction of the fibers), but are not always homogeneous in the transverse direction (the direction perpendicular to the direction of orientation of the fibers). Accordingly, when a number of UDSs are laminated, there occur differences in thickness in the transverse direction so that pressure may be applied at thicker portions upon the application of pressure in the y-direction in Fig. 2-1, and it is impossible to produce homogenization.

Further, when such a rotary laminated-body 7 such as shown in Fig. 3-b-1 is pressed from the y-direction or the direction of lamination (that is, pressure is applied from the outside of the circumference towards the center thereof), the fiber is buckled and a desirable laminated body cannot be obtained.

These problems have been solved according to the present invention by pressing the laminated body in the z-direction while restricting the laminated body in the y-direction. Thus, it is possible to obtain a laminated body, particularly a rotary one, which is compact and homogeneous uniform without being buckled in a tensioned state.

The thus obtained laminated body, that is, the precursor body, as described in detail above, is then sliced to obtain sheet-like materials each having a curved orientation.

The precursor body is sliced over all the laminated surfaces and along the plane parallel to the orientation of the fiber. Such a plane is defined to be a slicing plane.

In Figs. 5 and 6, the single-dot line indicates such a slicing plane which is parallel to the x-y plane. In Fig. 7, such a slicing plane is slanted relative to the x-y plane and is employed in the case where the precursor body is a plane-like laminated body. Thus, the slicing plane parallel to or slanting to the x-y plane and extending in the orientation of fiber can be generally defined as a plane containing all the laminated surfaces and extending in the orientation direction of the fibers.

Next, a method of slicing the precursor body along the slicing surface will be described. Fig. 8 illustrates a method of slicing the precursor body 7 shown in Fig. 6. The precursor body 7 is a rotary body having a central axis 11 as the center of rotation. The precursor body 7 is rotated by a support core 12, and a knife 13 is moved along a slicing plane 14, as indicated by an arrow, to slice the precursor body 7 to a predetermined thickness.

Although tool steel such as high speed steel, superhigh speed steel, or the like, is used for the knife 13, the slicing state depends on the material property of the matrix resin, the shape of the knife, the angle of the knife, the angle at which the knife is inserted in the slicing plane, and the like.

Concentrically oriented thin sheet materials as shown in Fig. 9 can be obtained from the thus sliced precursor body 7. In Fig. 9, each of the outer and inner diameters $D$ and $\underline{d}$ of the sheet material can be set to a desired value and the thickness $\underline{t}$ can be set to a value down to about 0.1 mm to perform stable slicing.

Fig. 10 shows a method of slicing the precursor body 4 of Fig. 5, which is a non-rotary body, by means of a band knife 15. The band knife 15 moves in the direction of an arrow 16 (or reciprocates), while the precursor body 4 moves in the direction of an arrow 17, so that the precursor body is sliced along a slicing plane 18.

When the non-rotary body or precursor body as shown in Fig. 10 is sliced, the precursor body 4 is desirably embedded in a material having a good slicing property, representative examples of which include foam, hard polyurethane foam, and the like.

By slicing the precursor body 4 in the manner described above, thin sheet materials 19, as shown in Fig. 11, each having a width of $t$ and a thickness of $th$ and having corrugated fiber orientation, can be obtained.

In slicing, similar to the case of slicing the rotary body, it has to be considered that the slicing conditions should be properly selected depending on the material properties of the fibers and the matrix resin constituting the precursor body.

The present invention will be further described in detail with reference to specific examples thereof.

Example 1

Twenty-two uni-directional prepregs (0.25 mm thick after hardening) were prepared by impregnating sheet-like aligned carbon fibers of 7 - 8 microns length with epoxy resin (40 volume %) laminated on a metal base ($\ell$ = 300 mm, w = 20 mm, and h = 30 mm), represented by reference numeral 20 in Fig. 12-a, so that the orientation of the laminated body 21 was parallel to the x-axis in Fig. 12-b, whereby a laminated body 21 as shown in Fig. 13-a (w = 20 mm, $\ell$ = 300 mm, t = 7.2 mm, and h = 30 mm) was obtained.

The laminated sheet precursor body 21 was heated and softened at 50°C for an hour and then pressed with a pressure of 70 kg/cm$^2$ in the z-direction to be made compact and homogeneous.

Next, the precursor body was embedded in hard polyurethane foam and sliced to a 0.2 mm thickness by (using a slicer for rubber) along a plane parallel to the x-y plane as shown in Fig. 13-b.

Thus, a thin prepreg ($\ell$ = 300 mm, h = 30 mm, th = 0.2 mm, and t = 7 mm) having a curved orientation as shown in Fig. 14 was obtained.

The thickness of the thus obtained prepreg became 0.17 mm through the process of lamination and hardening. The resulting material was found suitable for use as an angled tone arm material for a record player.

Example 2

A flanged bobbin, such represented by the reference numeral 5 in Fig. 3-a, was prepared, the bobbin being constituted by a nylon solid round bar having a diameter of 50 mm and a pair of iron flanges each having a diameter of 200 mm and attached at the opposite ends of the round bar with an interval of 30 mm, and a carbon uni-directional precursor body as described in Example 1 (having a thickness of 0.15 mm) was wound on the flanged bobbin so that the outer diameter of the winding along the orientation of fiber was 200 mm. At the time of winding, for the uni-directional precursor body, a piece of uni-directional precursor body having a 30 mm width and a 1.5 m length was used so as to prevent irregularities in thickness of the uni-directional precursor from concentrating at specific portions of the winding.

After such winding was finished, the laminated body was heated and softened at 50°C for three hours, and then was pressed at a pressure of 70 kg/cm$^2$ in the z-direction, as shown in Fig. 3-b-2, through iron flanges. By pressing, the outer diameter and thickness of the laminated body were reduced to 204 mm and 27 mm, respectively. The laminated body was then left to cool in the pressed state, and then sliced along the x-y plane with the z-axis as the rotary axis, as shown in Fig. 6. The method employed was the same as that shown in Fig. 8.

The laminated body was sliced to a 0.1 mm thickness under that conditions that the relative speed between the precursor body 7 and the knife 13 was about 150 m/minute, the angle formed between the slicing surface 14 and the knife 13 was about 2 degrees and the cutting speed (the speed at which the knife 13 was moved in the direction of the arrow in Fig. 8) was 60 mm/minute. The thus obtained thin disc-like materials were desired moldings in which carbon fibers were oriented circumferentially.

It has been found that the length of 60% or more of the carbon fibers contained in this precursor body was from 20 to 30 mm, and hence a sufficient composite property was obtained. Such a precursor body having a circumferential fiber orientation is useful as a reinforcing material for a gear, a high speed rotary disc, etc.

Example 3

A perforated pipe in the form of a flanged bobbin as shown in Fig. 4-a in which a pair of iron flanges were provided at an interval of 30 mm on the opposite sides of the pipe (having a 50 mm diameter and small holes formed in the surface thereof) was prepared, and a glass fiber tow which had a diameter of 13 - 14 microns and from which a sizing material was removed was wound on the flanged bobbin at a traverse speed of 2 mm per rotation of the bobbin. Then, the laminated body was put into a closed receptacle, the whole body was heated at 280°C, and then the receptacle was deaerated into a vacuum. Succeedingly, nylon resin heated and melted at 280°C was pressed into the laminated body of glass fiber two from the inside of the perforated pipe so as to impregnate the glass resin layers with the nylon resin.

After the resin was cooled, the flanges were removed and the laminated body was attached to a lathe with the perforated pipe as a rotary shaft and sliced to a 0.2 mm thickness by a knife at a cutting speed of about 500 m/min.

Preferred methods of manufacturing the precursor body according to the present invention have been described in detail. Using these methods, sheet materials having a desired curved orientation can be economically manufactured, and the present invention significantly contributes to the improvement of FRP in performance and cost.

CLAIMS

1. A method of manufacturing sheet materials, each having a curved orientation, comprising the steps of: preparing a sheet precursor body in which reinforcing fibers aligned in one direction of orientation are laminated and impregnated with matrix resin and which has at least a portion bent along the direction of orientation of said fibers; and slicing said sheet precursor body along a plane which includes all the laminated surfaces and which is parallel to the direction of orientation of said reinforcing fibers.

2. The method of manufacturing a sheet material according to claim 1, in which said sheet precursor body is obtained by laminating uni-directional oriented sheets, each obtained by impregnating reinforcing sheet-like fibers aligned in one direction with matrix resin.

3. The method of manufacturing a sheet material according to claim 1, in which said sheet precursor is obtained by laminating a plurality of sheet-like members of reinforcing fibers or strands of sheet-like reinforcing fibers aligned in one direction and then impregnating the laminated sheet-like members with matrix resin.

4. The method of manufacturing a sheet material according to claim 1, in which said sheet precursor body is pressed in a direction perpendicular to a plane determined by the direction of lamination of said sheet precursor body and the direction of orientation of said fibers so as to be made compact and homogeneous.

5. The method of manufacturing a sheet material according to claim 1, in which said sheet precursor body is a rotary body sliced with a knife.

6. The method of manufacturing a sheet material according to claim 1, in which said sheet precursor body is sliced with a band knife which moves in a direction crossing the direction of movement of said sheet precursor.

7. The method of manufacturing a sheet material according to claim 1, in which said sheets are laminated on a base having a wavy surface.

## FIG. 1

## FIG. 2-1

## FIG. 2-2

FIG. 3-a

FIG. 3-b-1

FIG. 3-b-2

FIG. 4-a

FIG. 4-b

*FIG. 5*

*FIG. 6*

*FIG. 7*

## FIG. 8

## FIG. 9

## FIG. 10

## FIG. 11

## FIG. 12-a

## FIG. 12-b

## FIG. 13-a

## FIG. 13-b

## FIG. 14